# EUROPÄISCHE PATENTSCHRIFT

(11) **EP 3 690 378 B1**
(45) Veröffentlichungstag und Bekanntmachung des Hinweises auf die Patenterteilung: **01.09.2021**
(21) Anmeldenummer: 19155325.4
(22) Anmeldetag: 04.02.2019
(51) Int. Cl.: F28F 25/08

(54) **EINBAUEINRICHTUNG FÜR EINE VORRICHTUNG ZUR BEHANDLUNG EINES NUTZFLUIDS MIT EINEM ARBEITSFLUID**
INSTALLATION ELEMENT FOR A DEVICE FOR TREATING A USAGE FLUID WITH A WORKING FLUID
MOYEN DE MONTAGE POUR UN DISPOSITIF DE TRAITEMENT D'UN FLUIDE UTILE AU MOYEN D'UN FLUIDE DE TRAVAIL

(43) Veröffentlichungstag der Anmeldung: 05.08.2020
(73) Patentinhaber: Hewitech GmbH & Co. KG, 48607 Ochtrup (DE)
(72) Erfinder: Dirkskötter, Frank, 48607 Ochtrup (DE)
(74) Vertreter: dompatent von Kreisler Selting Werner - Partnerschaft von Patent- und Rechtsanwälten mbB

(56) Entgegenhaltungen:
- DE-A1- 4 241 859
- DE-A1-102008 008 806
- DE-B4-102006 005 113
- DE-C2- 19 733 480

## Beschreibung

Die Erfindung betrifft Einbaueinrichtung für eine Vorrichtung zur Behandlung, insbesondere Befeuchtung und/oder Reinigung, eines Nutzfluids, insbesondere eines Gases, mittels eines Arbeitsfluids, insbesondere einer Flüssigkeit, und insbesondere zur Kühlung von Wasserdampf mittels Sprüh- und/oder Tropfwassers.

Vorrichtungen zur Behandlung von Gasen, insbesondere zur Befeuchtung, Reinigung und/oder Kühlung von Gasen wie bspw. Luft sind grundsätzlich bekannt. Derartige Vorrichtungen können bspw. als Verdunstungsbefeuchter oder Stoffaustauscher dienen, die unter anderem zur Luftbefeuchtigung und gleichzeitigen Luftkühlung bspw. in Wohn- oder Bürogebäuden, Lagerhallen, Stallungen, Gewächshäusern und anderen Räumen oder auch von technischen Anlagen, bspw. für die Reinigung und insbesondere Entstaubung von Zu- oder Abluft für reaktive Gas- oder Luftreinigungen (insbesondere Entfernung von Geruchsstoffen wie bspw. Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung). Behandlungsvorrichtungen dienen aber insbesondere auch als Wärmetauscher bspw. zum Einbau in bzw. an Kühltürmen und sind in der Ausgestaltung von Rieselkühlern grundsätzlich bekannt.

Die bekannten Behandlungsvorrichtungen der vorstehend genannten Arten weisen Einbaueinrichtungen in Form von Einbaupaketen auf, die jeweils eine Vielzahl von Mattenelementen aufweisen, welche zumeist gewellt sind, so dass bei dichter Anlage benachbarter Mattenelemente sich kreuzende oder seitlich versetzte Kanäle entstehen, durch die über eine Eingangsseite der Vorrichtung das Gas einströmt, die Vorrichtung durchströmt und an einer gegenüberliegenden Ausgangsseite wieder herausströmt. Beispiele für derartige Mattenelemente sowie aus diesen gebildete Einbaupakete sind in WO-A-2015/044274 und DE-U-67 51 260 beschrieben.

Die Eingangs- und Ausgangsseiten der Vorrichtung bzw. Einbaupakete werden durch gegenüberliegende Ränder einzelner nebeneinanderliegender Mattenelemente der eingangs- bzw. ausgangsseitig der Vorrichtung angeordneten Einbaupakete gebildet. Somit strömt also das zu behandelnde Fluid parallel zur Erstreckung der Mattenelemente zwischen deren betreffenden Ränder und zwischen den Mattenelementen hindurch. Grundsätzlich ist es aber auch möglich, dass das zu behandelnde Fluid quer zur Erstreckung der Mattenelemente strömt.

Die Einbaupakete der vorstehend genannten Typen von Nutzfluid-Behandlungsvorrichtungen werden mit Flüssigkeit, dem sogenannten Arbeitsfluid, bei dem es sich insbesondere um Wasser handelt, benetzt, so dass das zu behandelnde Nutzfluid an benetzten Flächen der Mattenelemente entlang strömt. Dabei ist es wünschenswert, dass die Benetzungsflüssigkeit eine möglichst große Oberfläche bildet und sich über einen längeren Zeitraum in der Vorrichtung bzw. den Einbaupaketen hält.

Im Regelfall sind die Mattenelemente rechteckförmig, wobei mehrere benachbarte Mattenelemente ein blockförmiges (quaderförmiges) Einbaupaket bilden. Es ist aber auch möglich, dass die Einbaupakete andere geometrische Formen aufweisen. So könnte man beispielsweise durch den Einsatz unterschiedlich großer, jeweils rechteckiger Mattenelemente ein Einbaupaket erhalten, das zylindrisch ist. Längs eines Durchmessers des Querschnitts des Zylinders sind dann die breitesten Mattenelemente angeordnet, wobei die jeweils benachbarten Mattenelemente in ihrer Breite abnehmen.

Die bekannten Nutzfluid-Behandlungsvorrichtungen können nach dem Gegenstrom oder nach dem Kreuzstromprinzip arbeiten. Beim Gegenstromprinzip strömen das zu behandelnde Fluid und das zur Behandlung dieses Fluids eingesetzte Arbeitsfluid (bspw. Kühlmedium) entgegengesetzt zueinander. Bei Behandlungsvorrichtungen, die nach dem Kreuzstromprinzip arbeiten, kreuzen sich die Strömungsrichtungen des zu behandelnden Fluids und für des Arbeitsfluids, und zwar im Regelfall unter einem im Wesentlichen rechten Winkel.

Die einzelnen Mattenelemente von Einbaueinrichtungen der zuvor beschriebenen Art sind im Regelfall durch Zapfen-Loch-Konstruktionen untereinander verbunden. Beispiele für derartige Verbindungstechniken sind in DE 42 41 859 A1, DE 197 33 480 C2, DE 198 19 945 C2, DE 10 2006 005 113 B4, DE 10 2006 025 303 B4 und DE 10 2008 008 806 A1 beschrieben. DE 197 33 480 C2 offenbart eine Einbaueinrichtung gemäß dem Oberbegriff des Anspruchs 1.

Aufgabe der Erfindung ist es, eine Einbaueinrichtung für eine Vorrichtung zur Behandlung eines Nutzfluids mit einem Arbeitsfluid anzugeben, bei der die Herstellung der Verbindung der einzelnen aneinanderliegenden Mattenelemente der Einbaueinrichtung vereinfacht ist.

Zur Lösung dieser Aufgabe wird mit der Erfindung eine Einbaueinrichtung für eine Vorrichtung zur Behandlung, insbesondere Befeuchtung und/oder Reinigung, eines Nutzfluids, insbesondere eines Gases, mittels eines Arbeitsfluids, insbesondere einer Flüssigkeit, und insbesondere zur Kühlung von Wasserdampf mittels Sprüh- und/oder Tropfwassers, vorgeschlagen, die versehen ist mit
- mindestens einem Einbaupaket aus mehreren viereckigen, gewellten Mattenelementen, die übereinanderliegend oder nebeneinanderstehend angeordnet sind,
- wobei benachbarte Mattenelemente durch Zapfen-Loch-Anordnungen mechanisch miteinander verbunden sind, indem von dem einen Mattenelement abstehende, jeweils ein freies Ende aufweisende Zapfen in in dem anderen Mattenelement ausgebildeten Aufnahmeöffnungen gesteckt sind,
- wobei die Aufnahmeöffnungen jeweils einen Öffnungsrand aufweisen, von dem eine flexible Klemmzunge in die Aufnahmeöffnung hineinragt, und
- wobei jede Aufnahmeöffnung eine durch das freie Ende der mindestens einen Klemmzunge und dem diesem Ende gegenüberliegenden Bereich des Öffnungsrandes oder eine durch die freien Enden mehrerer, insbesondere zweier oder dreier Klemmzungen eine Flächengröße aufweist, die kleiner ist als der Querschnitt des Zapfens im von der Aufnahmeöffnung aufgenommenen Zustand, in dem die mindestens eine Klemmzunge mit ihrem freien Ende zum freien des Zapfens hin gebogen an diesem anliegt.

Erfindungsgemäß weist die Einbaueinrichtung mindestens einen Einbaukörper auf, der seinerseits mindestens ein Mattenelement umfasst, das bei Betrachtung von der Seite, d. h. bei Betrachtung auf den Rand des Mattenelements, einen Dickengradienten aufweist. Der Einbaukörper ist im eingebauten Zustand derart angeordnet, dass die einzelnen Mattenelemente hochkant stehen, also vertikal ausgerichtet sind. Von oben auf den Einbaukörper wird das Arbeitsfluid aufgebracht. Hierbei handelt es sich beispielsweise um Sprüh- und/oder Tropfwasser. Dieses Arbeitsfluid fließt nun vertikal durch den Einbaukörper hindurch, wobei es längs der Mattenelemente über deren Oberfläche fließt bzw. von dieser abtropft. Gegebenenfalls weist mindestens ein Mattenelement einen Dickengradienten aufweist, so dass dieses Mattenelements nicht mehr ausschließlich vertikal, sondern schräg zur Vertikalen angeordnet bzw. weist mehrere schrägliegende Abschnitte auf. Das an diesen schräg zur Vertikalen verlaufenden Abschnitten entlangfließende Wasser tropft von dem Mattenelement ab und bildet somit eine vergrößerte Fläche, die dem den Einbaukörper im Gegen- oder Kreuzstrom durchziehenden Nutzfluid ausgesetzt ist.

Die Mattenelemente sind im Regelfall gewellt und weisen insbesondere eine Gitterstruktur auf, obwohl mitunter auch gewellte Folienmattenelemente eingesetzt werden. Die Höhe der Wellen variiert also gemäß der Erfüllung bei zumindest eines der Mattenelemente. Die obersten Punkte oder Linien der Erhebungen der Wellen und die untersten Punkte oder Linien der Vertiefungen der Wellen liegen jeweils in gemeinsamen Ebenen. Die obere Ebene der höchsten Punkte bzw. Linien ist dabei im Regelfall parallel (kann aber gegebenenfalls nicht parallel) ausgerichtet zur durch die untersten Punkte bzw. Linien definierten unteren Ebene. Bei nicht paralleler oberer und unterer Ebene sind beide gegeneinander ein- oder zweidimensional gekippt, wodurch der oben beschriebene Dickengradient entlang einer oder beider Flächendimensionen (Länge und/oder Breite des Mattenelements) entsteht.

Als Dickenerstreckung eines Mattenelements kann der Abstand zwischen der höchsten Erhebung auf der Oberseite des Mattenelements zur höchsten Erhebung auf der Unterseite des Mattenelements angesehen werden. Bei einem gewellten Mattenelement handelt es sich bei der Dickenerstreckung also um den Höhenabstand zwischen den Erhöhungen und den Vertiefungen (Täler und Berge) zuzüglich der Materialdicke.

Die erfindungsgemäß eingesetzte Verbindungstechnik umfasst Zapfen-Loch-Anordnungen, die selbsthemmend wirken. Hierzu weist die Loch-Anordnung eine Aufnahmeöffnung mit einem Öffnungsrand auf, von dem eine flexible Klemmzunge, vorzugsweise mehrere flexible Klemmzungen in die Aufnahmeöffnung hineinragt bzw. hineinragen. Die Aufnahmeöffnung weist dabei eine durch das freie Ende der mindestens einen Klemmzunge und dem diesem Ende gegenüberliegenden Bereich des Öffnungsrandes oder eine durch die freien Enden mehrerer, insbesondere zweier oder dreier Klemmzungen begrenzte Flächengröße auf, die kleiner ist als der Querschnitt des Zapfens im von der Aufnahmeöffnung aufgenommenen Zustand, in dem die mindestens eine Klemmzunge bzw. die mehreren Klemmzungen mit ihren freien Enden zum freien Ende des Zapfens hin gebogen an diesem anliegen. Ein derart die Klemmzunge bzw. die Klemmzungen beim Einführen in die Aufnahmeöffnung verbiegender Zapfen verkeilt sich mit den Klemmzungen umso mehr, je mehr Zugkräfte auf ihn wirken. Dieser selbsthemmende Verbindungsmechanismus garantiert, dass einmal miteinander verbundene, aneinanderliegende Mattenelemente sich selbsttätig kaum noch und im Idealfall nicht mehr unbeabsichtigt voneinander lösen können.

In zweckmäßiger Weiterbildung der Erfindung kann vorgesehen sein, dass die Zapfen-Loch-Anordnung zweier miteinander verbundener Mattenelemente paarweise komplementär ausgebildet ist.

Bei einer weiteren vorteilhaften Ausgestaltung der Erfindung kann vorgesehen sein, dass vom Öffnungsrand einer Aufnahmeöffnung drei um jeweils 120° versetzt angeordnete Klemmzungen abstehen und/oder dass die Zapfen im Querschnitt rund, insbesondere kreisrund oder polygonal sind.

Die Erfindung wird nachfolgend anhand eines Ausführungsbeispiels und unter Bezugnahme auf die Zeichnung näher erläutert. Im Einzelnen zeigen dabei:
- Fig. 1: eine stark schematisierte, perspektivische Ansicht auf einen Einbaukörper mit erfindungsgemäß miteinander verbundenen Mattenelementen,
- Fig. 2: eine perspektivische Darstellung eines Mattenelements, von denen mehrere beim Einbaukörper gemäß Fig. 1 eingesetzt sind,
- Fig. 3: eine Draufsicht auf das Mattenelement gemäß Fig. 2 zur Verdeutlichung der Zapfen-Loch-Anordnungen für die Verbindung benachbarter, aufeinanderliegender Mattenelemente und
- Fig. 4: eine schematisierte Seitenansicht auf mehrere benachbart angeordnete Mattenelemente mit Verdeutlichung der Zapfen-Loch-Verbindungen.

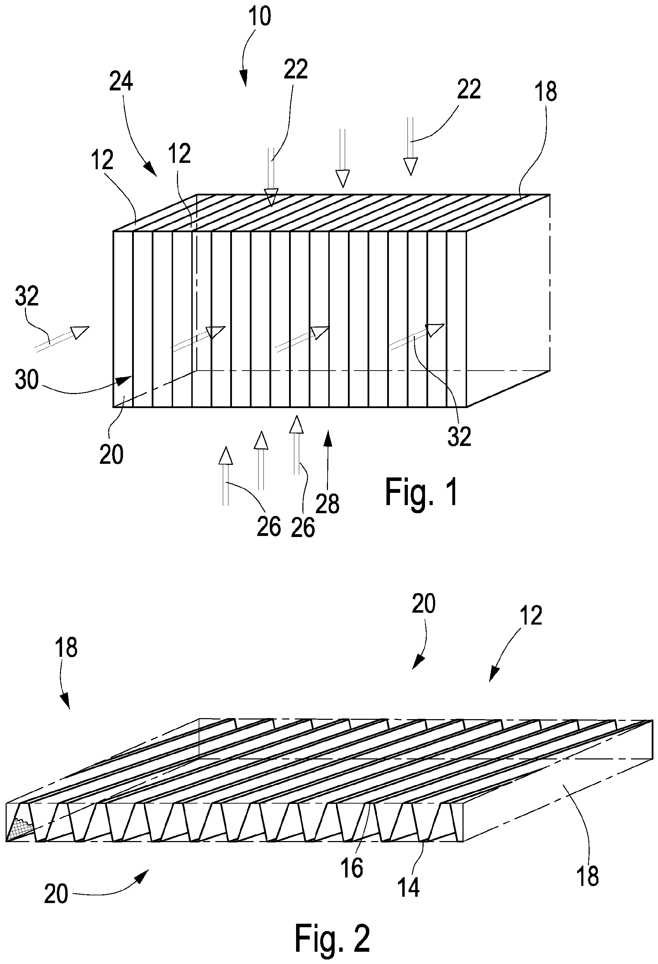

Fig. 1 zeigt stark schematisiert einen Einbaupaket 10 aus wechselweise gegeneinander um 180° verdreht angeordnete Mattenelementen 12 jeweils gleicher Struktur. Die Mattenelemente 12 sind gewellt und weisen wechselweise aufeinanderfolgende Vertiefungen 14 und Erhöhungen 16 auf, wie es in Fig. 2 angedeutet ist. Jedes Mattenelement 12 weist zwei gegenüberliegende Querränder 18 sowie zwei gegenüberliegende und rechtwinklig zu den Querrändern 18 verlaufende Längsränder 20 auf. Die Wellen, d.h. die "Berge" (Erhöhungen 16) und "Täler" (Vertiefungen 14) verlaufen im spitzen Winkel zu sowohl den Querrändern 18 als auch Längsrändern 20. Zu erkennen ist, dass die untersten Punkte der Vertiefungen 14 bzw. die von diesen gebildeten Böden in einer gemeinsamen unteren Ebene 17 verlaufen bzw. diese aufspannen, während die obersten Punkte bzw. Plateaus der Erhöhungen 16 in einer gemeinsamen oberen Ebene 19 liegen. Beide Ebenen 17, 19 sind parallel zueinander, könnten aber auch ein- oder zweidimensional geneigt sein, wie z.B. in WO 2018/083329 A1 beschrieben. Sprüh- bzw. Tropfwasser, das als Arbeitsfluid 22 auf die Oberseite 24 des Einbaupakets 10 aufgebracht wird, tropft innerhalb des Einbaupakets 10 herab und verfängt sich dabei an den Mattenelementen 12 bzw. deren Gitterstrukturen, bildet somit vergrößerte Oberflächen, so dass es dem im Gegenstrom (siehe die Strömungspfeile 26) in die Unterseite 28 oder aber dem von der Lateralseite 30 strömenden Nutzfluid (siehe die Strömungspfeile 32) eine größere Oberfläche bietet. Damit kommt es zu einem vermehrten Austausch bzw. einer Wechselwirkung von Nutzfluid und Arbeitsfluid.

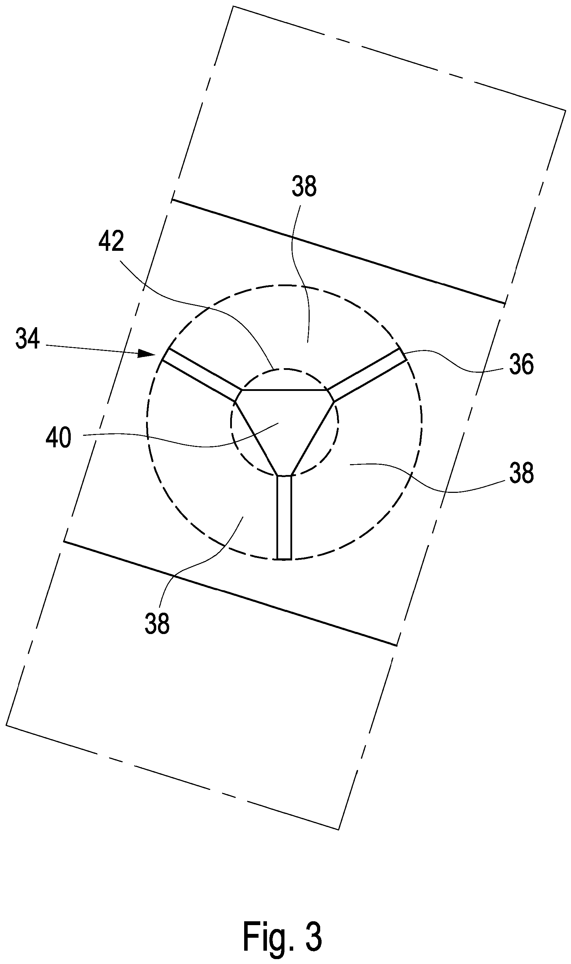

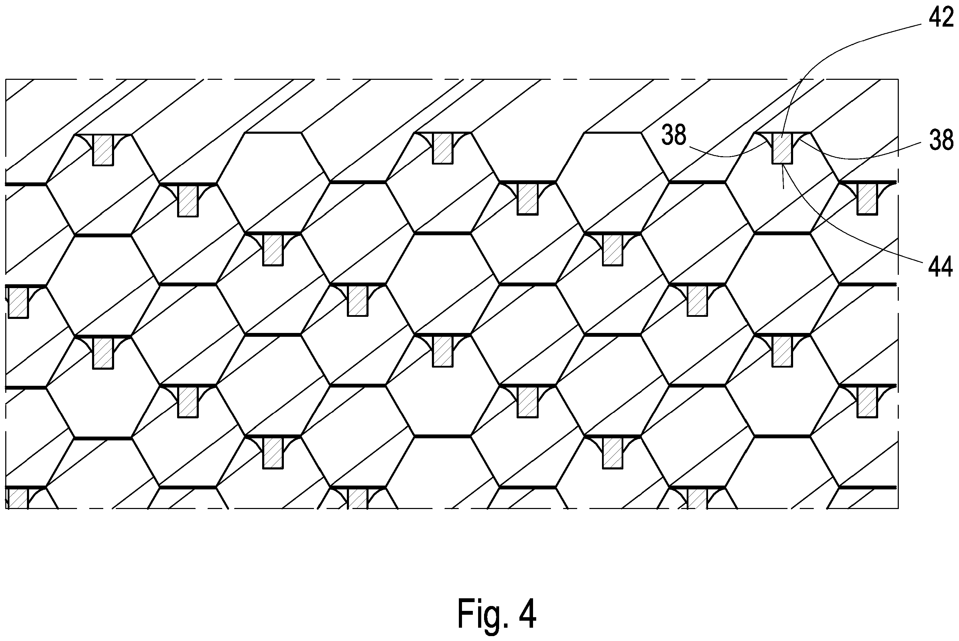

Anhand der Fign. 3 und 4 soll nachfolgend die erfindungsgemäße Zapfen-Loch-Verbindungskonstruktion benachbarter Mattenelemente 12 verdeutlicht werden. In diesem Zusammenhang sei darauf hingewiesen, dass aus Gründen der Übersichtlichkeit die Zapfen-Loch-Verbindungskonstruktionen in Fig. 2 nicht dargestellt sind.

Wie anhand von Fig. 3 zu erkennen ist, umfasst die Zapfen-Loch-Verbindungskonstruktion Aufnahmeöffnungen 34, die jeweils einen Öffnungsrand 36 umfassen, von dem aus sich Klemmzungen 38 (im Ausführungsbeispiel drei Klemmzungen pro Aufnahmeöffnung 34) in die Aufnahmeöffnung 34 hinein erstrecken. Im Zentrum jeder Aufnahmeöffnung 34 bildet sich ein Öffnungsbereich mit einer Flächengröße 40, deren Begrenzung einen Bereich definiert, welcher kleiner ist als der Querschnitt eines Zapfens 42, der in die Aufnahmeöffnung 34 bzw. in den freibleibenden Bereich der Flächengröße 40 eingesteckt ist, wenn zwei Mattenelemente 12 übereinanderliegend miteinander verbunden sind. Die Klemmzungen 38 verbiegen sich somit in Richtung des freien Endes 44 des Zapfens 42, stellen sich also insoweit auf und bilden einen Widerstand gegen ein Ablösen beider Mattenelemente 12, womit es zu einem Selbstklemmungseffekt kommt.

### BEZUGSZEICHENLISTE

- 10: Einbaupaket
- 12: Mattenelement des Einbaupakets
- 14: Vertiefungen des Mattenelements
- 16: Erhöhungen des Mattenelements
- 17: untere Ebene des Mattenelements
- 18: Querränder des Mattenelements
- 19: obere Ebene des Mattenelements
- 20: Längsränder des Mattenelements
- 22: Arbeitsfluid
- 24: Oberseite des Einbaupakets
- 28: Unterseite des Einbaupakets
- 30: Lateralseiten des Einbaupakets
- 32: Nutzfluid
- 34: Aufnahmeöffnung
- 36: Öffnungsrand
- 38: Klemmzungen
- 40: Flächengröße
- 42: Zapfen
- 44: Ende des Zapfens7

## Patentansprüche

1. Einbaueinrichtung für eine Vorrichtung zur Behandlung, insbesondere Befeuchtung und/oder Reinigung, eines Nutzfluids, insbesondere eines Gases, mittels eines Arbeitsfluids, insbesondere einer Flüssigkeit, und insbesondere zur Kühlung von Wasserdampf mittels Sprüh- und/oder Tropfwassers, mit
- mindestens einem Einbaupaket (10) aus mehreren viereckigen, gewellten Mattenelementen (12), die übereinanderliegend oder nebeneinanderstehend angeordnet sind,
- wobei benachbarte Mattenelemente (12) durch Zapfen-Loch-Anordnungen mechanisch miteinander verbunden sind, indem von dem einen Mattenelement (12) abstehende, jeweils ein freies Ende aufweisende Zapfen (42) in in dem anderen Mattenelement (12) ausgebildeten Aufnahmeöffnungen (34) gesteckt sind, **dadurch gekennzeichnet, dass**
- die Aufnahmeöffnungen (34) jeweils einen Öffnungsrand (36) aufweisen, von dem eine flexible Klemmzunge (38) in die Aufnahmeöffnung (34) hineinragt, und
- jede Aufnahmeöffnung (34) eine durch das freie Ende der mindestens einen Klemmzunge (38) und dem diesem Ende gegenüberliegenden Bereich des Öffnungsrandes (36) oder eine durch die freien Enden mehrerer, insbesondere zweier oder dreier Klemmzungen (38) Flächengröße (40) aufweist, die kleiner ist als der Querschnitt des Zapfens (42) im von der Aufnahmeöffnung (34) aufgenommenen Zustand, in dem die mindestens eine Klemmzunge (38) mit ihrem freien Ende zum freien des Zapfens (42) hin gebogen an diesem anliegt.

2. Einbaueinrichtung nach Anspruch 1, **dadurch gekennzeichnet, dass** die Zapfen-Loch-Anordnung zweier miteinander verbundener Mattenelemente (12) paarweise komplementär ausgebildet ist.

3. Einbaueinrichtung nach Anspruch 1 oder 2, **dadurch gekennzeichnet, dass** vom Öffnungsrand (36) einer Aufnahmeöffnung (34) drei um jeweils 120° versetzt angeordnete Klemmzungen (38) abstehen und/oder dass die Zapfen (42) im Querschnitt rund, insbesondere kreisrund oder polygonal sind.

## Claims

1. An installation means for a device for treating, in particular humidifying and/or cleaning, a net fluid, in particular a gas, by means of a working fluid, in particular a liquid, and particularly for cooling water vapor by means of spray water and/or drip water, comprising
- at least one installation package (10) of several square, waved mat elements (12) being arranged in an overlying or adjoining manner,
- wherein adjacent mat elements (12) are mechanically connected to each other by pin-hole-arrangements in which pins (42) protruding from the one mat element (12) and each comprising a free end are inserted in receiving openings (34) formed in the other mat element (12),
**characterized in that**
- the receiving openings (34) each comprise an opening edge (36) from which a flexible clamping tongue (38) protrudes into the receiving opening (34), and
- each receiving opening (34) comprises an area size (40) limited by the free end of the at least one clamping tongue (38) and the region of the opening edge (36) opposite to said end, or by the free ends of several, in particular two or three clamping tongues (38), the area size (40) being smaller than the cross-section of the pin (42) in the state of the pin (42) in which the pin (42) is received by the receiving opening (34), and in which the at least one clamping tongue (38) is bend with its free end to the free end of the pin and abuts against the pin (42).

2. The installation means according to claim 1, **characterized in that** the pin-hole arrangement of two mat elements (12) connected to each other is configured to be pairwise complementary.

3. The installation means according to claim 1 or 2, **characterized in that** three clamping tongues (38), each being arranged to be offset by 120°, protrude from the opening edge (36) into a receiving opening (34), and/or that the pins (42) have a round, in particular circular or polygonal cross-section.

## Revendications

1. Moyen de montage pour un dispositif de traitement, en particulier d'humidification et/ou de purification, d'un fluide utile, en particulier d'un gaz, au moyen d'un fluide de travail, en particulier d'un liquide, et en particulier pour le refroidissement de vapeur d'eau au moyen d'eau pulvérisée ou égouttée, doté
- d'au moins un ensemble de corps intégré (10) constitué de plusieurs éléments de nappe ondulée rectangulaires (12), lesquels sont disposés en superposition ou en juxtaposition,
- dans lequel des éléments de nappe (12) adjacents sont reliés mécaniquement l'un à l'autre par des arrangements tenon-mortaise, les tenons (42) dépassant de l'un élément de nappe (12) et comportant respectivement une extrémité libre étant enfichés dans les ouvertures d'accueil (34) réalisée dans l'autre élément de nappe (12), **caractérisé en ce que**
- les ouvertures d'accueil (34) comportent respectivement un bord d'ouverture (36), depuis lequel une languette de serrage flexible (38) s'engage dans l'ouverture d'accueil (34), et
- chaque ouverture d'accueil (34) comporte une surface (40), définie par l'extrémité libre de l'au moins une languette de serrage (38) et la zone du bord d'ouverture (36) opposée à cette extrémité ou par les extrémités libres de plusieurs, en particulier de deux ou trois, languettes de serrage (38), qui est inférieure à la section du tenon (42) dans l'état accueilli par l'ouverture d'accueil (34), l'au moins une languette de serrage (38) étant contiguë au tenon (42) avec son extrémité libre pliée vers l'extrémité libre de celui-ci.

2. Moyen de montage selon la revendication 1, **caractérisé en ce que** l'arrangement tenon-mortaise de deux éléments de nappe (12) reliés l'un à l'autre est réalisé de manière complémentaire par paire.

3. Moyen de montage selon la revendication 1 ou 2, **caractérisé en ce que** trois languettes de serrage (38) disposées en décalage respectif de 120° dépassent du bord d'ouverture (36) d'une ouverture d'accueil (34) et/ou **en ce que** les tenons (42) sont arrondis dans leur section, en particulier circulaires ou polygonaux.
